# EUROPÄISCHE PATENTANMELDUNG

(11) **EP 4 390 172 A1**
(43) Veröffentlichungstag der Anmeldung: **26.06.2024**
(21) Anmeldenummer: 23215496.3
(22) Anmeldetag: 11.12.2023
(51) Int. Cl.: F16D 49/08, F16D 65/04, F16D 69/02, F16D 65/10

(54) **HANDGEFÜHRTES ARBEITSGERÄT MIT EINER BREMSEINRICHTUNG**

(30) Priorität: 20.12.2022 DE 102022013411
(71) Anmelder: Andreas Stihl AG & Co. KG, 71336 Waiblingen (DE)
(72) Erfinder: Förster, Marcel, 71409 Schwaikheim (DE); Batista, Leonardo, 71336 Waiblingen (DE); Freund, Tobias, 73760 Ostfildern (DE); Angerbauer, Michael-Armin, 71642 Ludwigsburg (DE)
(74) Vertreter: Reinhardt, Annette

(57) **Zusammenfassung**

Ein handgeführtes Arbeitsgerät umfasst ein Werkzeug und eine Bremseinrichtung (10) für das Werkzeug. Die Bremseinrichtung (10) umfasst ein Bremsband (13) und eine Bremstrommel (12). Das Bremsband (13) umschlingt die Bremstrommel (12). Die Bremseinrichtung (10) ist derart ausgebildet, dass eine Reibfläche (25) des Bremsbands (13) im Bremsfall mit einer Reibfläche (24) der Bremstrommel (12) in Kontakt ist, so dass das Bremsband (13) und die Bremstrommel (12) Reibpartner bilden. Zumindest eine der Reibflächen (24, 25) ist vor einem ersten Bremsvorgang an einer Verschleißschicht (21) ausgebildet, wobei die Dicke (a) der Verschleißschicht (21) von 0,5 µm bis 3 µm beträgt oder wobei die Dicke (a) der Verschleißschicht (21) über 3 µm bis 20 µm beträgt und wobei die Verschleißschicht (21) Fe₂O₃ und/oder FeO enthält.

## Beschreibung

Die Erfindung betrifft ein handgeführtes Arbeitsgerät mit einer Bremseinrichtung.

Aus der DE 38 02 488 A1 ist ein handgeführtes Arbeitsgerät, nämlich eine Motorkettensäge mit einer Bremseinrichtung bekannt. Um ausreichend hohe Standzeiten des Bremsbands zu erreichen, ist vorgesehen, dass das Bremsband mit einer Schicht aus Oxidkeramik versehen ist. Die Dicke der Reibschicht soll dabei etwa 100 µm betragen.

Aus der DE 10 2013 005 287 A1 geht ein Arbeitsgerät mit einer Bremseinrichtung hervor, deren Bremsband eine Randschicht aufweist. In der Randschicht ist Kohlenstoff und/ oder Stickstoff eindiffundiert. In diesem Schutzrecht wird die Vermutung geäußert, dass die eindiffundierten Atome der Randschicht in der Matrix weiter zum Grundkörper diffundieren, wenn das Bremsband beim Bremsvorgang erwärmt wird.

Der Erfindung liegt die Aufgabe zugrunde, ein handgeführtes Arbeitsgerät mit einer Bremseinrichtung der gattungsgemäßen Art bereitzustellen, das verbesserte Eigenschaften aufweist.

Diese Aufgabe wird durch ein handgeführtes Arbeitsgerät mit einer Bremseinrichtung mit den Merkmalen des Anspruchs 1 und durch eine Bremseinrichtung mit den Merkmalen des Anspruchs 9 gelöst.

Bremseinrichtungen für handgeführte Arbeitsgeräte unterliegen einer Reihe von Randbedingungen. Die Reibungskoeffizienten der Reibpartner sollen über die gesamte Lebensdauer in engen Grenzen liegen. Über die Lebensdauer ändern sich jedoch die Reibungskoeffizienten mit zunehmender Anzahl von Bremsvorgängen. Es hat sich nun gezeigt, dass das tribologische System der beiden Reibpartner sich maßgeblich während der ersten Bremsvorgänge nach der Herstellung des Arbeitsgeräts ändert. Dabei werden insbesondere Oberflächenrauigkeiten geglättet. Dadurch sinkt der Reibungskoeffizient zwischen den Reibpartnern deutlich.

Erfindungsgemäß ist gemäß Anspruch 1 vorgesehen, dass zumindest eine der Reibflächen vor einem ersten Bremsvorgang an einer Verschleißschicht ausgebildet ist. Die Verschleißschicht weist dabei erfindungsgemäß eine vergleichsweise geringe Dicke von 0,5 µm bis 3 µm auf. Im Laufe der ersten Bremsvorgänge verschleißt die Verschleißschicht aufgrund ihrer Dicke von höchstens 3 µm. Die Verschleißschicht beeinflusst den Reibungskoeffizient zwischen den Reibpartnern daher nur über einen Teil der Bremsvorgänge, vorzugsweise nur über einige erste Bremsvorgänge. Vorzugsweise ist die Verschleißschicht über mindestens 3, insbesondere etwa 3 bis 5 Bremsvorgänge vorhanden. Nach mehr als 5, insbesondere weniger als 10 Bremsvorgängen kann die Verschleißschicht bereits verschlissen sein, und eine darunter liegende Schicht von Bremsband oder Bremstrommel bildet die Reibfläche. Bevorzugt ist die Verschleißschicht an einem Grundkörper des zugeordneten Reibpartners, also an einem Grundkörper von Bremstrommel und/oder Bremsband angeordnet. Nach Verschleiß der Verschleißschicht bildet der darunterliegende Grundkörper vorteilhaft die Reibfläche.

Die Verschleißschicht bewirkt, dass die Neigung zu Kaltverschweißungen der Reibpartner sich bei den ersten Bremsvorgängen verringert.

In bevorzugter Gestaltung enthält die Verschleißschicht Fe₂O₃ und/oder FeO. Die Verschleißschicht ist bevorzugt eine Mischoxidschicht, die Eisenoxide enthält.

Es hat sich gezeigt, dass insbesondere bei Bremstrommeln mit großen Durchmessern und/ oder bei großen Massenträgheitsmomenten der zu bremsenden Komponenten einschließlich des Werkzeugs die Verschleißschicht zu schnell verschlissen sein kann. Die Verschleißschicht kann insbesondere schon nach höchstens 5 Bremsvorgängen, insbesondere nach höchstens 3 Bremsvorgängen, insbesondere nach weniger als 3 Bremsvorgängen verschlissen sein. Es hat sich gezeigt, dass eine Dicke der Verschleißschicht von über 3 µm bis 50 µm, insbesondere von über 3 µm bis 20 µm, insbesondere von über 3 µm bis 10 µm, insbesondere von über 3 µm bis 5 µm, vorteilhafte Bremszeiten ergibt, wenn die Verschleißschicht Fe₂O₃ und/oder FeO enthält.

Dass die Dicke der Verschleißschicht über 3 µm beträgt bedeutet, dass die Dicke der Verschleißschicht mehr als 3 µm beträgt.

Nach dem Verschleiß der Verschleißschicht ist das Material der Verschleißschicht an der Reibfläche nicht mehr vorhanden. Die Bestandteile der Verschleißschicht werden bei den angegebenen wenigen ersten Bremsvorgängen abgetragen und nicht in das Grundmaterial eingetragen oder eindiffundiert.

Die Dicke der Verschleißschicht von über 3 µm bis 50 µm, insbesondere von über 3 µm bis 20 µm, insbesondere von über 3 µm bis 10 µm, insbesondere von über 3 µm bis 5 µm, ist insbesondere dann vorgesehen, wenn die andere der Reibflächen Stahl mit der Werkstoffnummer 1.4568 und/oder Stahl mit der Werkstoffnummer 1.4419 umfasst, insbesondere vollständig aus Stahl mit der Werkstoffnummer 1.4568 und/oder Stahl mit der Werkstoffnummer 1.4419 besteht.

In bevorzugter Gestaltung ist die Verschleißschicht keine Beschichtung, sondern eine Schicht, die durch Umwandlung, insbesondere Oxidation, der Oberfläche des Grundkörpers hergestellt wurde. Die Dicke der Verschleißschicht ist dabei die Oxidationstiefe.

Die Verschleißschicht ist vorteilhaft eine schwarzoxidische Umwandlungsschicht. Eine schwarzoxidische Umwandlungsschicht ist insbesondere eine Brünierschicht oder eine durch eine Dampfbehandlung hergestellte Schicht.

Besonders vorteilhaft ist die Verschleißschicht eine Brünierschicht, also eine Schicht, die durch Brünieren erzeugt wurde. Eine Brünierschicht ist nach DIN 50938 in der Fassung von Januar 2018 eine thermisch erzeugte schwarzoxidische Umwandlungsschicht, die durch Tauchen in heiße alkalische Salzlösungen hergestellt wird. Als besonderes bevorzugt hat sich eine Zweibadbrünierung herausgestellt. Auch eine Herstellung der Verschleißschicht durch eine Dampfbehandlung ("steam treatment" gemäß ASTM B935-16 in Fassung vom 01. Oktober 2016) kann vorgesehen sein.

Insbesondere ist die Verschleißschicht eine Brünierschicht, insbesondere nach DIN 50938 in der Fassung von Januar 2018, oder eine durch eine Dampfbehandlung ("steam treatment") hergestellte Schicht, insbesondere gemäß ASTM B935-16 in Fassung vom 01. Oktober 2016.

Alternativ ist bevorzugt vorgesehen, dass die Verschleißschicht Phosphat enthält. Bevorzugt ist die Verschleißschicht eine Phosphatschicht, eine Manganphosphatschicht, eine Zinkphosphatschicht, eine Eisenphosphatschicht oder eine Schicht, die eine Kombination von Phosphat, Manganphosphat, Zinkphosphat und/oder Eisenphosphat enthält. Auch andere Zusammensetzungen von Verschleißschichten können jedoch vorteilhaft sein. Die Schicht kann beispielsweise eine borierte Schicht sein.

Besonders vorteilhaft weist die Reibfläche der Bremstrommel die Verschleißschicht auf. Insbesondere bei einer durch Brünieren, durch ein anderes Tauchverfahren, durch eine Dampfbehandlung oder durch Borieren hergestellten Verschleißschicht ist vorteilhaft vorgesehen, dass die gesamte Bremstrommel die Verschleißschicht aufweist.

Vorteilhaft umfasst der Grundkörper der Bremstrommel gesinterten Stahl. Besonders bevorzugt besteht der Grundkörper der Bremstrommel aus gesintertem Stahl.

Bevorzugt umfasst der Grundkörper des Bremsbands nichtrostenden austenitischen Stahl. Besonders bevorzugt besteht der Grundkörper des Bremsbands aus nichtrostendem austenitischem Stahl.

Der austenitische Stahl des Grundkörpers des Bremsbands ist in vorteilhafter Ausführung wärmebehandelt, insbesondere ausscheidungsgehärtet. Alternativ oder zusätzlich kann vorgesehen sein, dass der Grundkörper dieses Reibpartners Federstahl, insbesondere Stahl mit der Werkstoffnummer 1.4568, umfasst.

In vorteilhafter alternativer Ausführung ist vorgesehen, dass der Grundkörper des Bremsbands nichtrostenden martensitischen Stahl umfasst. Der Grundkörper des Bremsbands umfasst insbesondere martensitisch gehärteten Chromstahl. Bevorzugt umfasst der Grundkörper dieses Reibpartners Stahl mit den Werkstoffnummern 1.4419, 1.4028, 1.4031, 1.4034 und/oder 1.4037. In besonders bevorzugter Gestaltung besteht der Grundkörper dieses Reibpartners aus einem der genannten Stähle.

Vorteilhaft weist ein Reibpartner keine Verschleißschicht auf. Dadurch entfällt der Arbeitsschritt der Herstellung der Verschleißschicht an diesem Reibpartner. Es hat sich gezeigt, dass eine Verschleißschicht auf einem der Reibpartner vorteilhaft ist, um einen gewünschten Reibungskoeffizienten zu erzielen.

Vorteilhaft ist die Reibfläche des Reibpartners, der keine Verschleißschicht aufweist, durch den Grundkörper dieses Reibpartners gebildet. Der Reibpartner, der keine Verschleißschicht mit der genannten, sehr geringen Dicke aufweist, besitzt demnach auch keine andere Beschichtung oder Diffusionsschicht. Die gemittelte Rautiefe R_{z} der Reibfläche des Reibpartners, der keine Verschleißschicht aufweist, beträgt vor dem ersten Bremsvorgang vorteilhaft höchstens 20 µm, insbesondere höchstens 10 µm, vorzugsweise 5 µm bis 7 µm. Die gemittelte Rautiefe R_{z} ist vorliegend die gemittelte Rautiefe R_{z} nach DIN EN ISO 4287:1984.

Vorteilhaft beträgt der Reibungskoeffizient zwischen der Reibfläche der Bremstrommel und der Reibfläche des Bremsbands von 0,1 bis 0,35, insbesondere von 0,15 bis 0,3. Der genannte Reibungskoeffizient besteht vorteilhaft sowohl während den ersten Bremsvorgängen, bei denen die Verschleißschicht die Reibfläche eines der Reibpartner bildet, als auch nach dem Verschleiß der Verschleißschicht und insbesondere, wenn der oder die Grundkörper von Bremstrommel und/oder Bremsband die Reibflächen bilden.

Die gemittelte Rautiefe R_{z} der Reibfläche mindestens eines Reibpartners, der die Verschleißschicht aufweist, beträgt vor dem ersten Bremsvorgang vorteilhaft höchstens 20 µm, insbesondere höchstens 10 µm, vorzugsweise von 5 µm bis 7 µm. Es hat sich gezeigt, dass eine gemittelte Rautiefe R_{z} der Reibfläche mindestens eines Reibpartners, der die Verschleißschicht aufweist, vor dem ersten Bremsvorgang von insbesondere 3 µm bis 5 µm vorteilhaft sein kann. Die gemittelte Rautiefe R_{z} ist demnach vorteilhaft geringer als die Dicke der Verschleißschicht. Beim ersten Kontakt der Reibpartner kommt die Verschleißschicht im Bereich der Erhöhungen der Oberfläche in Kontakt mit dem anderen Reibpartner. Diese Erhöhungen werden dadurch abgetragen, wodurch die Oberfläche geglättet wird und die tatsächliche Fläche, mit der die Reibpartner in Kontakt stehen, sich vergrößert. Die bei dem Kontakt erzeugte Wärme führt dazu, dass die Oberfläche in Bereichen, die keine Verschleißschicht mehr aufweist, oxidieren kann. Es hat sich gezeigt, dass dadurch eine Verschleißschicht mit einer Dicke, die geringer als die gemittelte Rautiefe R_{z} des Grundmaterials ist, ausreichend ist, um den Reibwert bei den ersten Bremsvorgängen in den gewünschten Bereich abzusenken.

Die gemittelte Rautiefe R_{z} kann, insbesondere, wenn die Dicke der Verschleißschicht mehr als 3 µm bis 20 µm beträgt, auch genauso groß oder größer als die Dicke der Verschleißschicht sein. Auch eine Verschleißschicht mit einer Dicke, die etwa so groß oder etwas größer als die gemittelte Rautiefe R_{z} des Grundmaterials ist, kann insbesondere ausreichend sein, um den Reibwert bei den ersten Bremsvorgängen in den gewünschten Bereich abzusenken. Insbesondere beträgt die gemittelte Rautiefe R_{z} weniger als das 5fache, insbesondere weniger als das 2fache der Dicke insbesondere weniger als die Dicke der Verschleißschicht. Insbesondere ist eine geringe gemittelte Rautiefe R_{z} vorteilhaft.

Das Arbeitsgerät ist insbesondere eine Motorsäge oder ein Trennschleifer. Es kann vorgesehen sein, dass das Arbeitsgerät einen Verbrennungsmotor zum Antrieb des Werkzeugs aufweist. Besonders bevorzugt ist das Arbeitsgerät jedoch ein akkubetriebenes Arbeitsgerät, das einen Elektromotor aufweist, der von einem Akku mit Energie versorgt wird. Insbesondere ist das Arbeitsgerät eine akkubetriebene Motorsäge.

Der erste Bremsvorgang ist vorliegend der Bremsvorgang, bei dem Bremstrommel und Bremsband erstmalig miteinander in Kontakt kommen. Der erste Bremsvorgang kann bereits bei der Herstellung des Arbeitsgeräts im Zuge von Funktionsprüfungen erfolgen.

Ausführungsbeispiele der Erfindung werden im Folgenden anhand der Zeichnung erläutert. Es zeigen:
- Fig. 1: eine schematische, teilgeschnittene Darstellung einer verbrennungsmotorisch angetriebenen Motorsäge,
- Fig. 2: eine schematische, ausschnittsweise Darstellung der Bremstrommel der Motor-säge aus Fig. 1,
- Fig. 3: den Ausschnitt III aus Fig. 2 in schematischer, stark vergrößerter Darstellung,
- Fig. 4: eine Darstellung des Bremsbands der Motorsäge aus Fig. 1,
- Fig. 5: eine Seitenansicht einer akkubetriebenen Motorsäge,
- Fig. 6: eine Seitenansicht eines akkubetriebenen Trennschleifers.

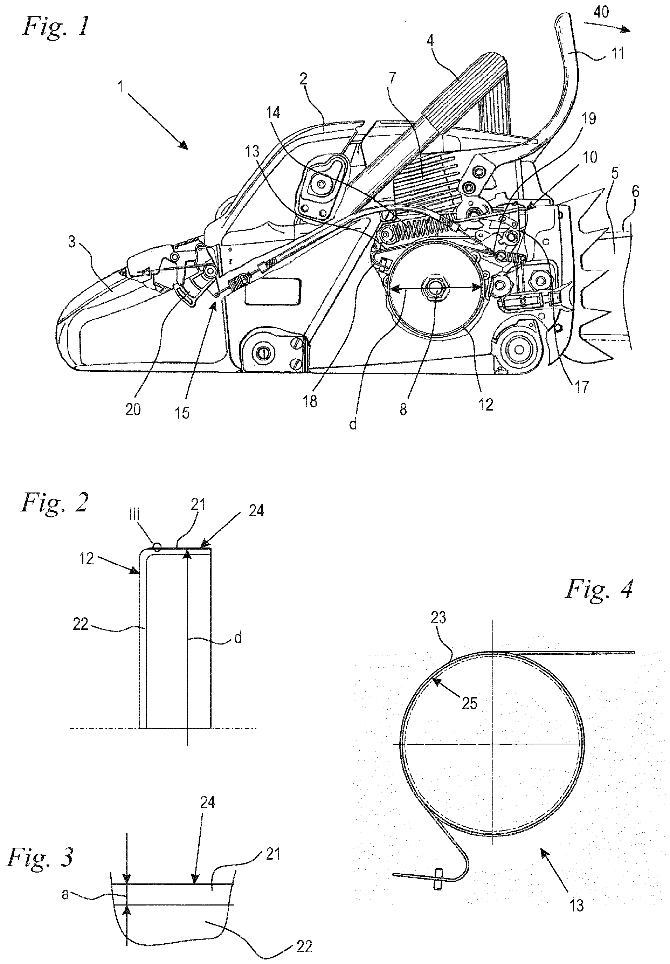

Fig. 1 zeigt als Ausführungsbeispiel für ein handgeführtes Arbeitsgerät eine Motorsäge 1. Anstatt der Motorsäge 1 kann das handgeführte Arbeitsgerät ein anderes handgeführtes Arbeitsgerät wie beispielsweise ein Trennschleifer, ein Freischneider, ein Erdbohrgerät, ein Rasenmäher oder dergleichen sein. Die Motorsäge 1 weist ein Gehäuse 2 auf, an dem ein hinterer Handgriff 3 und ein Griffrohr 4 gehalten sind. Das handgeführte Arbeitsgerät wird im Betrieb vom Bediener an den Handgriffen geführt und vorteilhaft vom Bediener getragen.

Die Motorsäge 1 weist eine Führungsschiene 5 auf, an der eine Sägekette 6 umlaufend angeordnet ist. Die Sägekette 6 bildet das Werkzeug der Motorsäge 1. Die Sägekette 6 ist im Betrieb von einem Antriebsmotor, im Ausführungsbeispiel von einem Verbrennungsmotor 7 umlaufend um die Führungsschiene 5 angetrieben. Der Verbrennungsmotor 7 weist eine Antriebswelle 8 auf. Die Antriebswelle 8 ist bevorzugt eine Kurbelwelle des Verbrennungsmotors 7. Die Antriebswelle 8 ist mit einer Bremstrommel 12 koppelbar. Die Bremstrommel 12 trägt bevorzugt ein in Fig. 1 nicht dargestelltes Antriebsritzel, mit dem die Sägekette 6 in üblicher Weise in Eingriff steht und das die Sägekette 6 antreibt. Auch eine andere Antriebsverbindung von der Bremstrommel 12 zum Werkzeug kann vorteilhaft sein. Die Motorsäge 1 weist einen Handschutz 11 auf. Um die Sägekette 6 stillzusetzen, ist eine Bremseinrichtung 10 vorgesehen. Bevorzugt dient der Handschutz 11 zum Auslösen der Bremseinrichtung 10.

Die Bremseinrichtung 10 weist ein Bremsband 13 auf, das die Bremstrommel 12 an ihrem Außenumfang zumindest teilweise umschlingt. Der Handschutz 11 wirkt über einen Kniehebelmechanismus 17 auf ein Auslöseende 19 des Bremsbands 13. Ein Befestigungsende 18 des Bremsbands 13 ist im Ausführungsbeispiel am Gehäuse 2 festgelegt. Wird der Handschutz 11 in Richtung des Pfeils 40 bewegt, so wird der Kniehebelmechanismus 17 über seinen Kipppunkt bewegt und von einer Feder 14 in die betätigte Stellung der Bremseinrichtung 10 gezogen. Dabei wird das Bremsband 13 um die Bremstrommel 12 festgezogen.

Bei der in Fig. 1 dargestellten Motorsäge 1 ist außerdem eine Zusatzbremseinrichtung 15 vorgesehen, die ebenfalls auf das Bremsband 13 wirkt und die mit einem Gashebel 20 der Motorsäge 1 verbunden ist.

Auch eine andere Gestaltung der Bremseinrichtung 10 kann vorteilhaft sein.

Die Bremstrommel 12 weist einen Durchmesser d auf. Der Durchmesser d ist der Außendurchmesser der Bremstrommel 12. Der Durchmesser d ist in einem Bereich des Außenumfangs der Bremstrommel 12 gemessen, an dem das Bremsband 13 anliegt. Der Durchmesser d beträgt insbesondere mehr als 50 mm. Insbesondere beträgt der Durchmesser d höchstens 90 mm.

Wie Fig. 2 zeigt, umfasst die Bremstrommel 12 einen Grundkörper 22, an dem eine Reibfläche 24 ausgebildet ist. Die Reibfläche 24 ist am Außenumfang der Bremstrommel 22 gebildet. An der Reibfläche 24 wirkt das Bremsband 13 im Bremsfall mit der Bremstrommel 12 zusammen. Die Bremstrommel 1 weist eine Innenfläche 36 auf. Die Innenfläche 36 und die Reibfläche 24 sind auf gegenüberliegenden Seiten eines hohlzylindrischen Abschnitts der Bremstrommel 22 ausgebildet. An der Reibfläche 24 weist die Bremstrommel 12 vor der ersten Bremsung eine Verschleißschicht 21 auf. Die Verschleißschicht 21 ist so dünn gestaltet, dass sie vorzugsweise während einer Anzahl erster Bremsungen verschleißt und nicht über die gesamte Lebensdauer der Bremstrommel 12 vorhanden ist. Die Verschleißschicht 21 ist vorteilhaft über mindestens 3, insbesondere über etwa 3 bis 5 Bremsvorgänge vorhanden. Nach mehr als 5, insbesondere weniger als 10 Bremsvorgängen kann die Verschleißschicht 21 bereits verschlissen sein.

Fig. 3 zeigt schematisch die Verschleißschicht 21 auf dem Grundkörper 22. In der Darstellung in Fig. 3 ist die Verschleißschicht 21 als separate Schicht dargestellt. Die Verschleißschicht 21 kann eine auf dem Grundkörper 22 der Bremstrommel 12 aufgebrachte Schicht sein. Es kann jedoch besonders bevorzugt vorgesehen sein, dass die Verschleißschicht 21 eine Oxidationsschicht ist, die durch Umwandlung des Grundmaterials und nicht durch Aufbringen einer Schicht hergestellt ist. Die Verschleißschicht 21 ist insbesondere eine schwarzoxidische Umwandlungsschicht. Die Verschleißschicht 21 kann beispielsweise eine Brünierschicht sein, die durch Tauchen in heiße alkalische Salzlösungen hergestellt wurde. Die Brünierschicht ist eine thermisch erzeugte schwarze oxidische Umwandlungsschicht. Auch eine andere Art der Herstellung der Verschleißschicht kann jedoch vorteilhaft sein. Die Verschleißschicht kann beispielsweise durch eine Dampfbehandlung ("steam treatment" gemäß ASTM B935-16 in Fassung vom 01. Oktober 2016) hergestellt sein. Die Verschleißschicht kann alternativ eine borierte Schicht sein.

Die Dicke a der Verschleißschicht 21 ist vorzugsweise sehr gering. Die Dicke a beträgt vorteilhaft von 0,3 µm bis 3 µm. Die Verschleißschicht 21 enthält vorteilhaft Fe₂O₃ und/oder FeO. Enthält die Verschleißschicht 21 Fe₂O₃ und/oder FeO, kann die Dicke a der Verschleißschicht 21 in alternativer Ausführung insbesondere von über 3 µm bis 50 µm, insbesondere von über 3 µm bis 20 µm, insbesondere von über 3 µm bis 10 µm, insbesondere von über 3 µm bis 5 µm, betragen. Es kann vorgesehen sein, dass die Verschleißschicht 21 eine schwarzoxidische Umwandlungsschicht, insbesondere eine Brünierschicht oder eine durch eine Dampfbehandlung ("steam treatment") hergestellte Schicht, ist. Es kann auch vorgesehen sein, dass die Verschleißschicht 21 Phosphat enthält. Die Verschleißschicht 21 kann insbesondere eine Phosphatschicht, eine Manganphosphatschicht oder eine Zinkphosphatschicht sein.

Die Dicke a der Verschleißschicht 21 beträgt insbesondere höchstens 50 µm, insbesondere höchstens 20 µm, insbesondere höchstens 10 µm, insbesondere höchstens 5 µm.

Die Dicke a der Verschleißschicht 21 ist insbesondere auf den Durchmesser d der Bremstrommel 12 abgestimmt. Üblicherweise wird der Durchmesser d der Bremstrommel 12 auf die zu übertragenden Kräfte abgestimmt. Je höher die zu übertragenden Kräfte sind, umso größer wird insbesondere der Durchmesser d der Bremstrommel 12 gewählt.

Die Dicke a der Verschleißschicht 21 von über 3 µm bis 50 µm, insbesondere von über 3 µm bis 20 µm, insbesondere von über 3 µm bis 10 µm, insbesondere von über 3 µm bis 5 µm ist insbesondere dann vorgesehen, wenn die andere der Reibflächen Stahl mit der Werkstoffnummer 1.4568 und/ oder Stahl mit der Werkstoffnummer 1.4419 umfasst, insbesondere vollständig aus Stahl mit der Werkstoffnummer 1.4568 und/oder Stahl mit der Werkstoffnummer 1.4419 besteht.

Fig. 4 zeigt das Bremsband 13 des Ausführungsbeispiels. Das Bremsband 13 weist einen Grundkörper 23 auf, an dessen Innenfläche eine Reibfläche 25 ausgebildet ist. Im Bremsfall kommen die Reibflächen 24 und 25 von Bremstrommel 12 und Bremsband 13 miteinander in Reibkontakt und bremsen dadurch die Bremstrommel 12 bis zum Stillstand ab.

Im Ausführungsbeispiel trägt die Bremstrommel 12 die Verschleißschicht 21, und das Bremsband 13 trägt keine Verschleißschicht. In alternativer Ausführung kann vorgesehen sein, dass das Bremsband 13 eine Verschleißschicht 21 aufweist. Die Bremstrommel 12 kann in diesem Fall ohne Verschleißschicht 21 ausgebildet sein. In weiterer alternativer Ausführung weisen sowohl das Bremsband 13 als auch die Bremstrommel 12 eine Verschleißschicht 21 auf.

Bevorzugt weist die Bremstrommel 12 die Verschleißschicht 21 auf.

Der Grundkörper der Bremstrommel 12 umfasst vorteilhaft gesinterten Stahl. Bevorzugt besteht der Grundkörper der Bremstrommel 12 aus gesintertem Stahl.

Das Bremsband 13 weist bevorzugt keine Verschleißschicht 21 auf. Der Grundkörper 23 des Bremsbandes 13 umfasst vorteilhaft nichtrostenden austenitischen Stahl. Bevorzugt besteht der Grundkörper 23 des Bremsbands 13 aus nichtrostendem austenitischen Stahl. Der austenitische Stahl des Grundkörpers 23 des Bremsbands 13 ist vorteilhaft wärmebehandelt, insbesondere ausscheidungsgehärtet. Der Grundkörper 23 des Bremsbandes 13 besteht vorteilhaft aus Federstahl, insbesondere aus Federstahl mit der Werkstoffnummer 1.4568. Es kann vorgesehen sein, dass der Grundkörper des Bremsbands 13 weitere Komponenten umfasst.

Der Grundkörper des Bremsbands 13 kann in alternativer Ausführungsvariante nichtrostenden martensitischen Stahl, bevorzugt martensitisch gehärteten Chromstahl umfassen. Besonders bevorzugt umfasst der Grundkörper des Bremsbands 13 Stahl mit den Werkstoffnummern 1.4419, 1.4028, 1.4031, 1.4034 und/oder 1.4037.

Weist ein Reibpartner keine Verschleißschicht 21 auf, so ist vorteilhaft vorgesehen, dass die Reibfläche 24, 25 durch den Grundkörper 22, 23 dieses Reibpartners gebildet ist.

Die gemittelte Rautiefe R_{z} der Reibflächen 24 und 25 von Bremstrommel 12 und Bremsband 13 beträgt vor dem ersten Bremsvorgang vorteilhaft höchstens 20 µm, insbesondere höchstens 10 µm, vorzugsweise 5 µm bis 7 µm. Der Reibungskoeffizient zwischen der Reibfläche 24 der Bremstrommel 12 und der Reibfläche 25 des Bremsbands 13 beträgt vorteilhaft von 0,1 bis 0,35, insbesondere von 0,15 bis 0,3.

Insbesondere beträgt die gemittelte Rautiefe R_{z} weniger als das 5fache, insbesondere weniger als das 2fache der Dicke a der Verschleißschicht 21. Insbesondere beträgt die gemittelte Rautiefe R_{z} weniger als die Dicke a der Verschleißschicht 21. Eine gemittelte Rautiefe R_{z}, die weniger als die Dicke a der Verschleißschicht 21 beträgt, ist insbesondere dann vorteilhaft, wenn die Dicke a der Verschleißschicht 21 mehr als 3 µm, insbesondere mindestens 5 µm, insbesondere mindestens 10 µm beträgt.

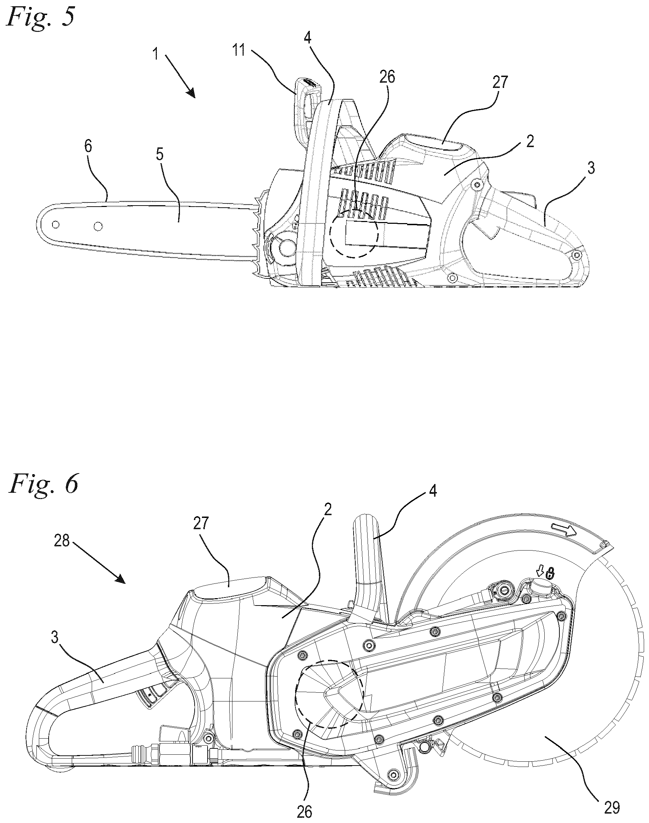

Fig. 5 zeigt als Ausführungsbeispiel für eine Motorsäge 1 eine akkubetriebene Motorsäge 1. Im Gehäuse 2 der Motorsäge 1 ist ein Elektromotor 26 angeordnet, der zum Antrieb der Sägekette 6 dient. Der Elektromotor 26 wird von einem Akku 27 mit Energie versorgt.

Fig. 6 zeigt als Ausführungsbeispiel für ein handgeführtes Arbeitsgerät einen akkubetriebenen Trennschleifer 28. Der Trennschleifer 28 umfasst den Elektromotor 26, der von dem Akku 27 mit Energie versorgt wird. Das Werkzeug des Trennschleifers 28 bildet eine Trennscheibe 29, die im Betrieb rotierend von dem Elektromotor 26 angetrieben ist.

In der Wirkverbindung zwischen Elektromotor 26 und Sägekette 6 bzw. Trennscheibe 29 ist eine Bremseinrichtung 10 entsprechend der zu den Fig. 1 bis 4 erläuterten Bremseinrichtung 10 angeordnet.

## Patentansprüche

1. Handgeführtes Arbeitsgerät mit einem Werkzeug und mit einer Bremseinrichtung (10) für das Werkzeug, wobei die Bremseinrichtung (10) ein Bremsband (13) und eine Bremstrommel (12) umfasst, wobei das Bremsband (13) die Bremstrommel (12) umschlingt und wobei die Bremseinrichtung (10) derart ausgebildet ist, dass eine Reibfläche (25) des Bremsbands (13) im Bremsfall mit einer Reibfläche (24) der Bremstrommel (12) in Kontakt ist, so dass das Bremsband (13) und die Bremstrommel (12) Reibpartner bilden,
**dadurch gekennzeichnet, dass** zumindest eine der Reibflächen (24, 25) vor einem ersten Bremsvorgang an einer Verschleißschicht (21) ausgebildet ist, wobei die Dicke (a) der Verschleißschicht (21) von 0,5 µm bis 3 µm beträgt.

2. Arbeitsgerät nach Anspruch 1,
**dadurch gekennzeichnet, dass** die Verschleißschicht (21) Fe₂O₃ und/oder FeO enthält.

3. Arbeitsgerät nach Anspruch 1,
**dadurch gekennzeichnet, dass** die Verschleißschicht (21) Phosphat enthält, wobei die Verschleißschicht (21) insbesondere eine Phosphatschicht, eine Manganphosphatschicht, eine Zinkphosphatschicht oder eine Eisenoxidschicht ist oder eine Kombination von Phosphat, Manganphosphat, Zinkphosphat und/oder Eisenphosphat enthält.

4. Arbeitsgerät nach einem der Ansprüche 1 bis 5,
**dadurch gekennzeichnet, dass** die Reibfläche (24) der Bremstrommel (12) die Verschleißschicht (21) aufweist und dass der Grundkörper (22) der Bremstrommel (12) gesinterten Stahl umfasst.

5. Arbeitsgerät nach einem der Ansprüche 1 bis 4,
**dadurch gekennzeichnet, dass** der Grundkörper (23) des Bremsbands (13) Federstahl, insbesondere Stahl mit der Werkstoffnummer 1.4568 umfasst.

6. Arbeitsgerät nach einem der Ansprüche 1 bis 4,
**dadurch gekennzeichnet, dass** der Grundkörper (23) des Bremsbands (13) nichtrostenden martensitischen Stahl umfasst, insbesondere martensitisch gehärteten Chromstahl, vorzugsweise Stahl mit den Werkstoffnummern 1.4419, 1.4028, 1.4031, 1.4034 und/oder 1.4037.

7. Arbeitsgerät nach einem der Ansprüche 1 bis 6,
**dadurch gekennzeichnet**, die gemittelte Rautiefe R_{z} der Reibfläche (24, 25) mindestens eines Reibpartners vor dem ersten Bremsvorgang höchstens 20 µm, insbesondere höchstens 10 µm beträgt.

8. Arbeitsgerät nach einem der Ansprüche 1 bis 7
**dadurch gekennzeichnet, dass** der Reibungskoeffizient zwischen der Reibfläche (24) der Bremstrommel (12) und der Reibfläche (25) des Bremsbands (13) von 0,1 bis 0,35, insbesondere von 0,15 bis 0,3 beträgt.

9. Handgeführtes Arbeitsgerät mit einem Werkzeug und mit einer Bremseinrichtung (10) für das Werkzeug, wobei die Bremseinrichtung (10) ein Bremsband (13) und eine Bremstrommel (12) umfasst, wobei das Bremsband (13) die Bremstrommel (12) umschlingt und wobei die Bremseinrichtung (10) derart ausgebildet ist, dass eine Reibfläche (25) des Bremsbands (13) im Bremsfall mit einer Reibfläche (24) der Bremstrommel (12) in Kontakt ist, so dass das Bremsband (13) und die Bremstrommel (12) Reibpartner bilden,
**dadurch gekennzeichnet, dass** zumindest eine der Reibflächen (24, 25) vor einem ersten Bremsvorgang an einer Verschleißschicht (21) ausgebildet ist, wobei die Dicke (a) der Verschleißschicht (21) über 3 µm bis 50 µm beträgt und dass die Verschleißschicht (21) Fe₂O₃ und/oder FeO enthält.

10. Arbeitsgerät nach Anspruch 9,
**dadurch gekennzeichnet, dass** die Verschleißschicht (21) Phosphat enthält, wobei die Verschleißschicht (21) insbesondere eine Phosphatschicht, eine Manganphosphatschicht, eine Zinkphosphatschicht oder eine Eisenoxidschicht ist oder eine Kombination von Phosphat, Manganphosphat, Zinkphosphat und/oder Eisenphosphat enthält.

11. Arbeitsgerät nach Anspruch 9 oder 10,
**dadurch gekennzeichnet, dass** die Reibfläche (24) der Bremstrommel (12) die Verschleißschicht (21) aufweist und dass der Grundkörper (22) der Bremstrommel (12) gesinterten Stahl umfasst.

12. Arbeitsgerät nach einem der Ansprüche 9 bis 11,
**dadurch gekennzeichnet, dass** der Grundkörper (23) des Bremsbands (13) Federstahl, insbesondere Stahl mit der Werkstoffnummer 1.4568 umfasst.

13. Arbeitsgerät nach einem der Ansprüche 9 bis 11,
**dadurch gekennzeichnet, dass** der Grundkörper (23) des Bremsbands (13) nichtrostenden martensitischen Stahl umfasst, insbesondere martensitisch gehärteten Chromstahl, vorzugsweise Stahl mit den Werkstoffnummern 1.4419, 1.4028, 1.4031, 1.4034 und/oder 1.4037.

14. Arbeitsgerät nach einem der Ansprüche 9 bis 13,
**dadurch gekennzeichnet**, die gemittelte Rautiefe R_{z} der Reibfläche (24, 25) mindestens eines Reibpartners vor dem ersten Bremsvorgang höchstens 20 µm, insbesondere höchstens 10 µm beträgt.

15. Arbeitsgerät nach einem der Ansprüche 9 bis 14,
**dadurch gekennzeichnet, dass** der Reibungskoeffizient zwischen der Reibfläche (24) der Bremstrommel (12) und der Reibfläche (25) des Bremsbands (13) von 0,1 bis 0,35, insbesondere von 0,15 bis 0,3 beträgt.
